# EUROPEAN PATENT APPLICATION

(11) **EP 0 616 159 A1**
(43) Date of publication of application: **21.09.1994**
(21) Application number: 94103445.6
(22) Date of filing: 07.03.1994
(51) Int. Cl.: F16L 7/00, E04F 17/02

(54) **Device for keeping objects spaced apart**

(30) Priority: 15.03.1993 NL 9300452
(71) Applicant: GENERAL ELECTRIC COMPANY, Schenectady, NY 12345 (US)
(72) Inventor: Balemans, Franciscus Johannes Anna, NL-4600 AC Bergen op Zoom (NL)
(74) Representative: Grever, Frederik

(57) **Abstract**

The invention relates to a device for keeping the wall of a first object (2) spaced apart from the wall of a spaced second object (1) which surrounds the first object (2). The device comprises a number of wires (13) consisting of a resilient material. At one end the said wires (13) are connected to a supporting member (7) and from the said supporting member (7) extend in the unloaded condition freely in a direction away from the supporting member (7).

## Description

The invention relates to a device for keeping the wall of a first object spaced apart from the wall of a spaced second object surrounding the first object.

Known devices for keeping objects spaced apart usually consist of parts, for example, from metal, which are rigidly connected to the said objects. When such a known device is used, difficulties are encountered in that it is often difficult for the device to be matched to deviations in the spacing between the objects with respect to the spacing for which the device has been designed.

Furthermore, difficulties may be encountered in that the device is not suitable for receiving relative movements, if any, between the objects, as a result of which undesired stresses may be formed in the device and/or the objects, which may lead to damage of the objects.

It is the object of the invention to provide a device of the type mentioned in the opening paragraph, in which the above-mentioned disadvantages can be omitted.

According to the invention this can be achieved in that the device comprises a number of wires of a resilient material, and each wire is connected at one end to a supporting member and, in the unloaded condition, extends freely from the said supporting member in a direction away from the supporting member.

When using the device according to the invention, one or more supporting parts may assume a fixed position with respect to one of the objects, while the free ends of the wires may contact the other object. The wires may be deflected slightly from their unloaded position, so that they bear with a certain force on the said other object and thus keep the two objects at a desired spacing with respect to each other. Variations, if any, in the spacing between the objects can easily be compensated for. The wires of a resilient material are also capable of receiving movements, if any, between the objects without undesired stresses occurring in the objects and/or the wires of a resilient material.

The invention will now be described in greater detail with reference to a few possible embodiments of the device according to the invention shown in the accompanying drawings, in which
Figure 1 is a diagrammatic cross-sectional view of a part of a flue gas duct in which a jacket has been placed which is kept spaced from the wall of the flue gas duct by means of devices according to the invention,
Figure 2 is a perspective view of a supporting member having two bundles of wires connected therewith,
Figure 3 is a perspective view of a second embodiment of the construction according to the invention,
Figure 4 is a perspective view of a third embodiment of the construction according to the invention,
Figure 5 is a perspective view of a clamping strap comprising supporting members for receiving the wires,
Figure 6 is a perspective view of a part of the clamping strap shown in Figure 5,
Figure 7 is a cross-sectional view of the clamping strap shown in Figure 5,
Figure 8 shows a further embodiment of a supporting member with wire bundles connected therewith.

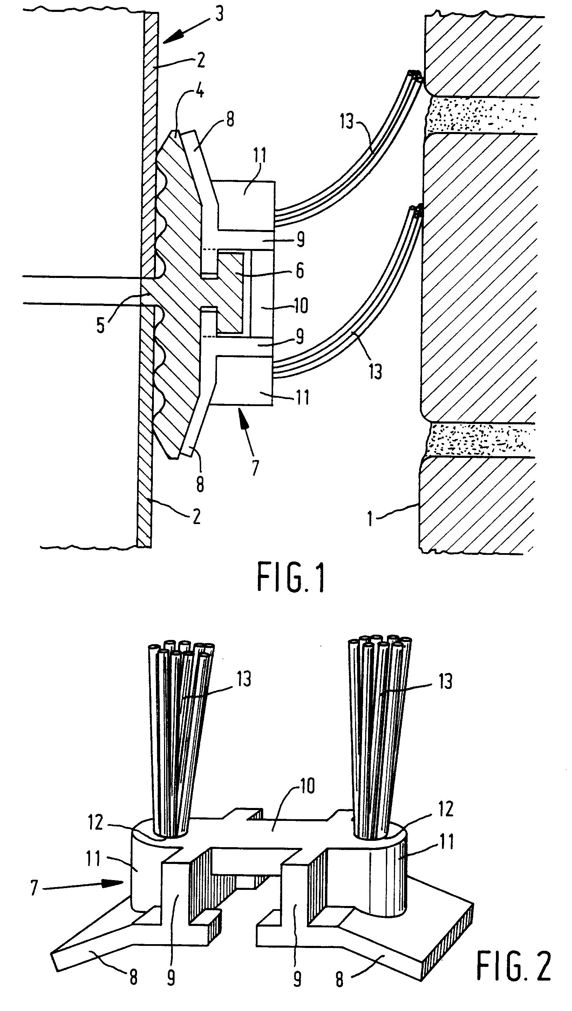

Figure 1 shows a part of a first object in the form of a brickwork flue gas duct or chimney 1. A jacket 3 formed from a number of pipes 2 which are arranged in the elongation of each other is arranged in said flue gas duct.

The facing ends of the pipes 2 situated in the elongation of each other are surrounded by a retaining ring 4 which extends over the two juxtaposed ends of the said pipes 2 and surround the said ends, said ring comprising on its inside a circumferential projecting nozzle 5 which is enclosed between the ends of the two pipes 2.

The outer circumference of the ring 4 comprises a circumferential ridge 6 which is T-shaped in cross-section. A number of supporting parts 7 are slid on said ridge (only one is shown).

As is shown in greater detail in Figures 1 and 2, a supporting member 7 comprises two wings 8 which are situated against the outside of the ring 4 and the facing ends of which are situated at some distance from each other. Near their facing ends the wings comprise ridges 9 which extend more or less at right angles to the wings and which are connected together by a connection member 10. On the sides of the ridges 9 remote from each other, studs 11 extend which also adjoin the wings 8, as will be apparent from Figures 1 and 2.

Holes 12 are formed in the studs 11 in which the ends of wires 13 consisting of resilient material are fixed in such a manner that two wire bundles are formed which are situated at some distance from each other.

Both the supporting member 7 and the wires 13 are preferably manufactured from a synthetic material.

Several of the supporting members 7 shown in Figures 1 and 2 with wire bundles 13 supported thereby may be provided on the ring 4 so as to be spaced at desired distances from each other. Upon inserting the jacket 3 into the chimney 1, the resilient wires will be deflected, as is shown in Figure 1, from their unloaded condition in which they extend at least substantially radially with respect to the jacket 3, so that the wire bundles will engage the brickwork of the chimney with a certain force. By suitable arrangement of the supporting members 7 with the wire bundles supported thereby around the circumference of the jacket 3, a substantially centric arrangement of the jacket 3 in the interior of the flue gas duct 1 can be achieved. It will be obvious that size deviations, if any, caused by irregularities in the inner surface of the flue gas duct can easily be compensated for by deflection of the wire bundles.

Furthermore, the wire bundles 13 supporting the jacket will allow a movement both in the axial dirction and in the radial direction of the jacket 3 with respect to the brickwork of the flue gas duct 1, caused, for example, by temperature fluctuations. Undesired stresses in the various components will substantially not occur.

Of course, within the gist and the scope of protection of the invention many variations of the embodiment described hereinbefore and shown in Figures 1 and 2 are feasible.

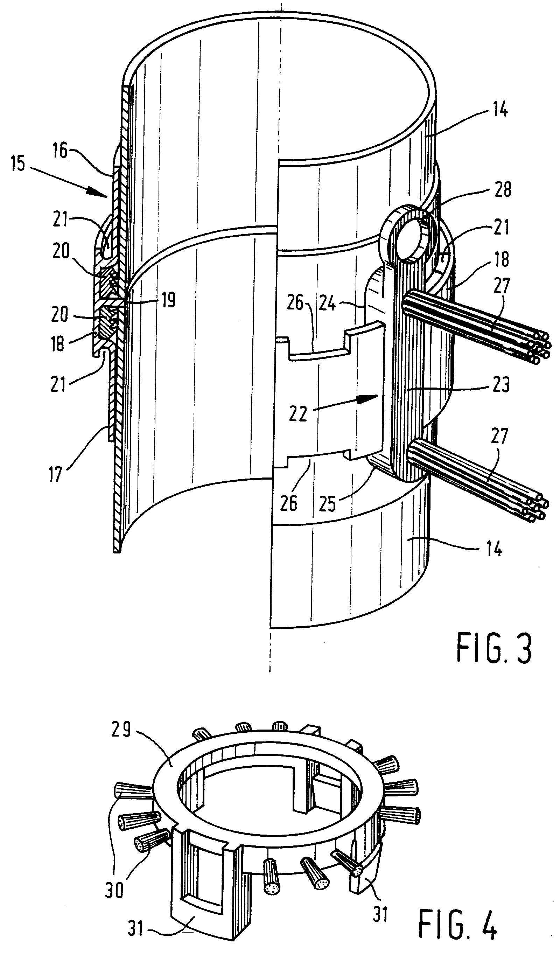

Figure 3, for example, shows an embodiment in which two pipes 14 situated in the elongation of each other are also connected by means of the facing ends of the annular member 15 surrounding the pipes 14, which member comprises two parts 16 and 17 which engage the ends of the pipes 14 and which are connected together by a part 18 situated at a distance from the said parts 16 and 17. A circumferential ridge 19 which is enclosed between the ends of the two pipes 14 adjoins the inside of the said part 18, as is shown in Figure 3. Sealing rings 20 are enclosed between the pipes 14 and the part 18 on each side of the ridge 19.

As is further shown in Figure 3, the parts 16 and 17 adjoin the part 18 at some distance from the upper and lower boundary rims, respectively, of the part 18, as a result of which ducts 21 situated between the parts 16 and 17 and the part 18 are formed at the upper and lower ends, respectively, of the part 18.

A number of supporting members 22 may be coupled to the annular member 15. Each supporting member comprises a body 23 having two adjoining hook-like parts 24 and 25 which engage in the grooves 21 in the manner shown in Figure 3. Recesses 26 for hooking the hook-like parts 24 and 25 are provided in the part 18.

In the Figure 3 embodiment each supporting member 22 comprises two spaced-apart wire bundles 27 each formed by a number of wires of a resilient material which, in the unloaded condition, each extend substantially parallel to each other.

An eyelet 28 is provided at the top end of the member 23.

In this embodiment also any desired number of supporting members 22 having wire bundles may again be coupled to the annular member 15 and, by means of said supporting members comprising the said wire bundles, the pipes may be held in any desired position with respect to an object which surrounds the said pipes and is not further shown, for example, a flue gas duct.

The eyelets 28 of the various supporting members 27 may be used to suspend the assembly upon inserting the pipes 14 into a flue gas duct or the like.

Figure 4 shows an embodiment in which an annular member 29 which forms a supporting member and preferably is made from a synthetic resin, comprises a number of circumferentially provided wire bundles 30 each consisting, in a manner similar to that of the preceding embodiments, of a number of wires of a resilient material which, from their ends embedded or clamped in the annular member 29, extend radially outwards. The annular member 29 may comprise any desired connection means 31, for example, to clamp the said annular member, for example, around an object to be supported. The operation of the said annular member 29 having wire bundles 30 will further be comparable to the operation of the devices comprising wire bundles as described hereinbefore.

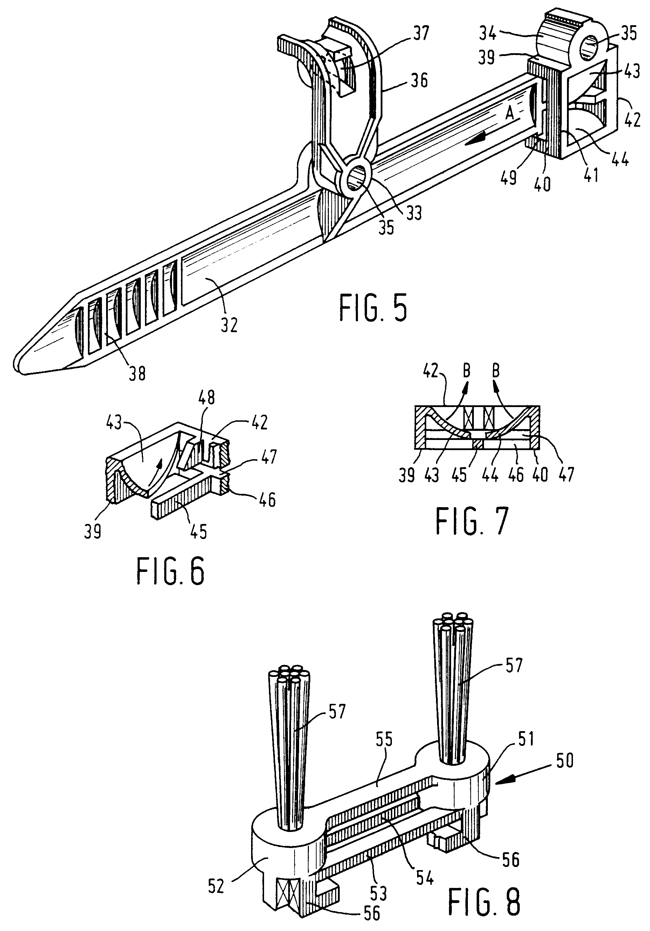

In the embodiment shown in Figure 5 a few studs 33 and 34 forming one assembly with an elongate flexible strap 32 are provided on the said strap. Each of the studs or supporting members comprises an aperture 35 for receiving the ends of a number of wires consisting of a resilient material and united to form a bundle, in a manner similar to that described hereinbefore with reference to the preceding embodiments.

An arm 33 which is substantially L-shaped and extends transversely to the strap 32 and in one end of which arm a passage 37 is formed is provided at the level of the stud 33.

Furthermore, near one end the strap 32 comprises a number of ridges 38 extending transversely to the longitudinal direction of the strap.

Near the other end of the strap 32 ridges 39 and 40 extending at right angles to the flexible strap 32 are provided on oppositely located side edges of the strap, said ridges being connected by two connection ridges and situated at some distance from the strap.

On the facing sides of the ridges 39 and 40 wings 43 and 44 having more or less the shape of a sector of a sphere adjoin the said ridges. The facing ends of the wings are situated at the level of an elongate ridge 45 extending in the elongation of the longitudinal axis of the strap 32 and forming one assembly with the strap, said ridge, at its end remote from the strap 32, adjoining a transverse ridge 46 which connects both ridges 39 and 40, the ridge 46, with the overlying transverse ridge 42, bounds a slot 47 situated between the said ridges 42 and 46. A projecting nose 48 connected to the transverse ridge 42 is connected over the ridge 45.

As will be further apparent from Figure 5, the stud 34 is connected to the flexible strap 32 via the ridge 39.

Of course, a greater number of studs than the studs 33 and 34 for receiving wire bundles of resilient material may be connected to the flexible strap 32. The strap 32 may be coupled to an object to be supported by means of the wire bundles of a resilient material by laying the strap 32 on the object in question and inserting the end of the strap comprising ridges 38 through the slot 47 and the slot 49 which is situated in the elongation thereof and which is bounded between the ridge 41 and the adjacent end of the strap 32. By inserting the end of the strap 32 comprising ridges 38 through the slots 47 and 49 in the direction of the arrow A, the wings 43 and 44 will divert resiliently, as is shown in Figure 7 by means of the arrows B. In this manner the strap can be tightened around the article and in the tightened position can be locked in that the free ends of the wings 43 and 44 will then engage one of the ridges 38.

Figure 8 shows an embodiment in which a supporting member 50 comprises two hub-like parts 51 and 52 which are connected together by two parallel extending connection ridges 53 and 54 which are situated at the same level and a further connection ridge 55 which extends parallel to the connection ridges 53 and 54 and, viewed in Figure 8, is situated at some distance above the ridges 53 and 54, so that a slot for passing through a flexible strap or the like is formed between the ridge 55 and the underlying ridges 53 and 54.

On the side of the connection ridges 53 and 54 remote from the connection ridge 55 the hub-like parts 52 comprise hooks 56 which are L-shaped in cross-section.

As is further shown in Figure 8, the ends of wire bundles 57 of a resilient material are inserted in apertures formed in the hub-like parts 52, the said wires extending at least substantially parallel to each other.

A number of such supporting members 50 comprising wire bundles may now be threaded on a flexible strap or the like and be clamped on an object to be supported by means of such a strap. The number of supporting members comprising wire bundles, as well as the mutual distance between the said supporting members may then be adjusted at will and depending on the circumstances.

If the supporting member comprises the hook-shaped parts 56 shown in Figure 8, the said hook-shaped parts 56 may-also be used to secure the supporting members to an article to be supported.

If so desired, the supporting members 50 may, for example, comprise eyelets similar to the eyelets 28 (Figure 3) for suspending an object connected to the supporting member(s). However, it will also be possible to pass a suspension cable or the like through the slot present between the ridge 55 and the ridges 53 and 54.

Although the use of the device according to the invention has hereinbefore been described for use of a jacket to be supported in a chimney, it will be obvious that the device may also be used in other cases in which two objects must be kept spaced apart.

It will further be obvious that single wires may also be used instead of a number of wires united to form bundles.

It is also possible to manufacture the supporting members and the wires from one assembly.

## Claims

1. A device for keeping the wall of a first object spaced apart from the wall of a spaced second object which surrounds - the first object, wherein the device comprises a number of wires of a resilient material, and each wire is connected at one end to a supporting member and, in the unloaded condition, extends freely in a direction away from the supporting member.

2. A device as claimed in Claim 1, wherein the wires are combined to form at least one bundle.

3. A device as claimed in any preceding Claim, wherein a supporting member comprises two spaced apart bundles of wires consisting of a resilient material.

4. A device as claimed in any of the preceding Claims, wherein the supporting members comprise means by means of which the supporting members can be coupled to a supporting member.

5. A device as claimed in Claim 4, wherein the means are formed by hook-shaped members which cooperate with a hook engaging member provided on the supporting member.

6. A device as claimed in Claim 4, wherein the supporting members comprise a passage through which a supporting member formed by a strap-shaped member has been threaded.

7. A device as claimed in any of the preceding Claims 4-6, wherein the supporting members can be adjusted in the longitudinal direction of the supporting member.

8. A device as claimed in any of the preceding Claims, wherein a number of supporting members form one assembly with a flexible strap which connects the supporting members together and which at its ends comprises locking means which can be coupled together.

9. A device as claimed in any of the preceding Claims, wherein the supporting member is formed by an annular member to which a number of radially extending wires have been connected.
